# EUROPEAN PATENT APPLICATION

(11) **EP 4 286 351 A1**
(43) Date of publication of application: **06.12.2023**
(21) Application number: 22305812.4
(22) Date of filing: 03.06.2022
(51) Int. Cl.: C04B 28/04, C04B 28/06, C04B 28/08, C04B 28/12

(54) **KIT FOR PREPARING A WATERPROOFING MEMBRANE**

(71) Applicant: Saint-Gobain Weber France, 94370 Sucy en Brie (FR)
(72) Inventor: FEIGE, Ludovic, 93300 Aubervilliers (FR); DUDDA, Udo, 40549 Düsseldorf (DE); TEULERE, Coralie, 93300 Aubervilliers (FR)
(74) Representative: Saint-Gobain Recherche

(57) **Abstract**

The invention relates to a kit for preparing a waterproofing membrane comprising:
- a powder component comprising hydraulic binder and aggregates, and
- a liquid component comprising an aqueous dispersion of polyurethane and of a polymer other than polyurethane and a surfactant.

## Description

The invention relates to the field of construction. More particularly, it concerns the production of waterproofing membranes for buildings.

The waterproofing of roofs, terraces, balconies, wet rooms or facades is essential to ensure the durability of buildings.

For this purpose, many waterproofing systems have been developed. These include bituminous membranes and thermoplastic or vulcanized synthetic membranes that are welded together, hot-mix asphalt coatings, or systems known as "liquid waterproofing membranes".

The latter consist of polymeric resin-based materials applied in one or more layers by spraying or by application with a roller, a brush or a squeegee. Different types of resins are used, in particular polyesters, acrylics, neoprene bitumens, or polyurethane resins. These systems are very durable and easy to apply, and generally allow pedestrian traffic directly after drying, eliminating the need for heavy protection. The drying may however take time, especially in humid and/or cold conditions, because it relies on evaporation and coalescence. For this reason, 2-component systems using a resin-based liquid component and a powder component comprising a hydraulic binder, in which hardening by hydraulic reaction takes place, have been developed. Such systems use for example styrene-acrylic aqueous dispersions. However, it has been observed that under very cold conditions (for example at -20°C), the membranes are very brittle and cannot bridge cracks of the substrate, or they have at ambient temperatures (for example at +20°C) a tacky surface.

The aim of the invention is to remedy these drawbacks by providing a waterproofing membrane that can be easily applied, and that after drying can bridge cracks even in very cold conditions and shows no tackiness and good waterproofing properties.

These objectives are achieved by means of a kit for preparing a waterproofing membrane comprising:
- a powder component comprising hydraulic binder and aggregates, and
- a liquid component comprising i) an aqueous dispersion of polyurethane and of a polymer other than polyurethane, and ii) a surfactant.

Another subject of the invention is a method of waterproofing a roof, a deck, a balcony, a wet room or a façade, comprising mixing the liquid component with the powder component of the kit according to the invention to obtain a composition and applying said composition to a substrate of said roof, deck, balcony or facade to form a membrane, and then drying said membrane to obtain a dry membrane having a dry thickness of from 0.5 to 6.0 mm.

Still another subject of the invention is a waterproofing membrane able to be obtained (or obtained) by this method.

The inventors have found that by using an aqueous dispersion of polyurethane and of another polymer than polyurethane as well as a surfactant, it was possible to obtain waterproofing membranes that show good waterproofing properties at room temperature as well as in very cold conditions. Such a membrane remains soft even at very low temperature and can bridge cracks of the substrate, without its surface being tacky at room temperature.

### Powder component

The powder component is a pulverulent dry mixture that contains hydraulic binder and aggregates.

The total amount of hydraulic binder in the powder component is preferably 10-60wt%, especially 20-50wt%.

The total amount of aggregates in the powder component is preferably 20-80wt%, especially 30-60wt%.

These amounts are calculated with respect to the total weight of powder component.

The hydraulic binder is preferably selected from Ordinary Portland Cements (OPC), Calcium Aluminate Cements (CAC), Calcium Sulfoaluminate Cements (CSA), fly ashes, slags such as ground granulated blast furnace slags, hydraulic lime, source of calcium sulfate and mixtures thereof. A preferred hydraulic binder comprises or consists of a mixture of OPC, CAC and a source of calcium sulfate.

The term "Portland cement" means a cement of the CEM I to CEM V type, especially of the CEM I or CEM II type, as defined in EN 197-1. A CEM I cement comprises at least 95wt% of clinker, while a CEM II cement comprises at least 65wt% of clinker and at most 35wt% of at least one of blast-furnace slag, silica fume, pozzolana, fly ash, burnt shale and limestone.

The source of calcium sulfate is preferably selected from gypsum, hemihydrate, anhydrite and any mixture of these compounds.

Aggregates preferably comprise siliceous aggregates and/or carbonaceous aggregates. They may contain sands and/or fillers.

Aggregates are, for example, silica sand, ground limestone, chalk, marble, clay, marl, aluminum oxide, talc and/or barite, with preference being given to siliceous sands, siliceous flours, carbonates in the form of ground limestone, crushed limestone sands, chalk, dolomite, magnesite and mixtures thereof.

Aggregates may also comprise organic fillers, for example shredded plastic waste, such as plastic waste composed of polyvinyl chloride, polystyrene, polyethylene, polypropylene or melamine resins. Rubber particles and/or polystyrene spheres may also be used.

Aggregates may also comprise pigments and/or fibers.

Fibers may be introduced in order to reinforce the bulk of the membrane or to provide better workability or anti-sagging properties. Fibers are for example selected from synthetic polymeric fibers and fibers coming from renewable resources such as cellulose fibers or wood fibers.

The powder component may also contain one or more additives, especially selected from retarders, accelerators, plasticizers, superplasticizers, water retainers, defoaming agents, extenders and anticaking agents. Retarders and accelerators make it possible to control the hydraulic reaction, and may be selected from salts of lithium, salts of calcium, salts of sodium, acids, phosphates and sulfates. The total amount of such additives in the powder component is preferably 0.1-3.0wt%, especially 0.2-2.0wt%.

### Liquid component

The liquid component comprises an aqueous dispersion of polymers. The polymers are dispersed in water as particles. The surfactant is generally dissolved or dispersed in the aqueous dispersion.

The polymer other than polyurethane preferably comprises at least a polymer based on one or more monomers selected from the group including vinyl esters (especially vinyl esters of unbranched or branched alkylcarboxylic acids having from 1 to 15 carbon atoms), methacrylates and acrylates (especially (meth)acrylates of alcohols having from 1 to 10 carbon atoms), methacrylic acid, acrylic acid, vinyl aromatics, vinyl acetal, olefins, dienes and vinyl halides.

The vinyl esters are preferably vinyl acetate, vinyl propionate, vinyl butyrate, vinyl 2-ethylhexanoate, vinyl laurate, 1-methylvinyl acetate, vinyl pivalate and vinyl esters of alpha-branched monocarboxylic acids having from 5 to 11 carbon atoms. Preferred methacrylates or acrylates are methyl acrylate, methyl methacrylate, ethyl acrylate, ethyl methacrylate, propyl acrylate, propyl methacrylate, n-butyl acrylate, n-butyl methacrylate and 2-ethylhexyl acrylate. Vinyl aromatics are preferably styrene, methylstyrene and vinyltoluene. Vinyl acetal resins are for example polyvinylbutyral. The preferred vinyl halide is vinyl chloride. The preferred olefins are ethylene and propylene, and the preferred dienes are 1,3-butadiene and isoprene.

Particularly preferred polymers are copolymers of at least two of the abovementioned monomers, especially vinyl acetate-ethylene copolymers, vinyl ester-ethylene-vinyl chloride copolymers, vinyl acetate copolymers, vinyl acetate-acrylate copolymers, copolymers of methyl methacrylate with n-butyl acrylate and/or 2-ethylhexyl acrylate, copolymers of methyl methacrylate with 1,3-butadiene, vinyl chloride-ethylene copolymers, vinyl chloride-acrylate copolymers, styrene-butadiene copolymers, styrene-acrylate copolymers, vinyl acetate-(meth)acrylic acid-ethylene terpolymers.

Styrene-acrylate copolymers, styrene-butadiene copolymers and mixtures thereof are especially preferred.

The polymer other than polyurethane may also be a mixture of such polymers. The polyurethane may as well be a mixture of different polyurethanes.

The Tg (glass transition temperature) of the polymer other than polyurethane is preferably -50 to +50°C, especially -10 to +20°C, in order to avoid tackiness at room temperature. The minimum film forming temperature (MFFT) of the polymer other than polyurethane is preferably lower than 15°C, even lower than 10°C.

The polymer other than polyurethane is preferably anionic.

Preferably, the polymer other than polyurethane has a rather low surface charge (in absolute value), since it has been observed that a high surface charge (in absolute value) may lead to a heterogeneous membrane, which may require to increase the amount of polyurethane to obtain good flexibility at low temperature.

Preferably, the absolute value of the surface charge density, measured by Streaming Current Detector (SCD), is lower than 150 pmol/g, even lower than 100 pmol/g, especially at pH = 7.0.

The polyurethane is preferably anionic. The anionic charges are for example introduced in the polymeric chain by co-polymerization of monomers containing an acid function, especially a carboxylic acid function. In such a case, the polyurethane particles therefore contain carboxylate groups. These carboxylate groups may be obtained by the neutralization of carboxylic acid groups by a volatile base (such as an amine). Aqueous dispersions of anionic polyurethane are for example obtained according to patent application EP1584641.

The polyurethane may in addition contain alkoxy silyl groups to provide self-reticulation. In that case, the polyurethane dispersion may also contain water-insoluble transition metal compound particles, such as zinc oxide particles.

Polyurethanes are produced by reacting polyisocyanates (especially diisocyanates) with polyols.

The polyisocyanates may be aliphatic polyisocyanates such as for example 1,6-hexamethylene-diisocyanate, isophorone-diisocyanate, 2,4 hexahydrotoluene-diisocyanate, 2,6 hexahydrotoluene diisocyanate, dicyclohexylmethane-diisocyanates, tétraméthylxylène-diisocyanate, norbornane-diisocyanate, bis-isocyanatomethyl)cyclohexane, tetra-methylène-1,4-diisocyanate, cyclohexane-1,4-diisocyanate, 1,12-dodecane-diisocyanate, and 2,2,4-trimethylhexamethylene-diisocyanate.

Aromatic polyisocyanates may also be used. They are selected for example from the group consisting of xylylenediisocyanate, 2,4-toluene-diisocyanate, 2,6-toluene-diisocyanate, and methylene-diphenyl-diisocyanate.

The polyols are for example polyether-polyols, polyester-polyols or polycarbonate-polyols, or mixtures thereof.

To introduce anionic charges into the polymer, a dihydroxylated carboxylic acid such as dimethylol propionic acid (DMPA) may be copolymerized together with the polyols and polyisocyanates.

A preferred polyurethane is prepared from aromatic diisocyanates and polyether-polyols.

The minimum film forming temperature (MFFT) of the polyurethane is preferably lower than 15°C, even lower than 10°C. The Tg (glass transition temperature) of the polyurethane is preferably lower than 10°C, even lower than 5°C, or lower than 0°C. The size of the polyurethane particles is preferably 100 to 300 nm.

Preferably, the total amount of polymers represents 15-65wt%, especially 20-60wt%, even 30-55wt%, based on the weight of polymers and water. This amount, also called "polymer content", or "dry polymer content", takes into account all polymers, i.e. polyurethane(s) and polymer(s) other than polyurethane, and is calculated on a dry basis, by dividing the total weight of polymers by the sum of the weight of water and the total weight of the polymers.

The weight ratio between the total amount of polyurethane and the total amount of polymer other than polyurethane is preferably 10:90 to 90:10, especially 20:80 to 70:30, even 30:70 to 60:40. This ratio is calculated by dividing the weight of polyurethane by the weight of polymer other than polyurethane (on a dry basis). This ratio may especially be adjusted depending on the Tg of the polymer other than polyurethane. For example, if the Tg is high, a lower ratio makes it possible to improve the flexibility of the membrane at low temperature. If the Tg is low, a lower ratio may also be advantageous in order to avoid tackiness after drying.

The surfactant is preferably non-ionic. The surfactant (especially when it is non-ionic) makes it possible to disperse the polyurethane particles in the mixture and avoid their coagulation when they contact the hydraulic binder.

Non-ionic surfactants are preferably selected from fatty alcohol ethoxylates (especially with alcohols in C8-C22), alkylphenol ethoxylates, fatty acid ethoxylates, ethoxylates amines and/or fatty acid amides, terminally blocked ethoxylates, fatty acid esters of polyhydroxy compounds such as glycerol or sorbitol, fatty acid esters of sucrose, alkyl polyglycosides, alcohol ethoxylate propoxylates and ethylene oxide/propylene oxide block copolymers.

The amount of surfactant in the liquid component is preferably 0.01-0.40 grams of dry surfactant per gram of dry polymer, especially 0.03-0.30 g/g. This amount is calculated by dividing the weight of surfactant by the total weight of polymers (on a dry basis). Again, the total weight of polymers takes into account all the polymers present in the liquid component, i.e. the polyurethane(s) as well as the polymer(s) other than polyurethane.

The liquid component may also contain additives, such as thickeners, defoamers, biocides and/or preservatives.

The liquid component may be obtained by mixing an aqueous polyurethane dispersion (PUD) with an aqueous dispersion of the other polymer(s) and adding the surfactant.

The pH of the liquid component is preferably 7.0 to 9.0.

The weight ratio between the liquid component and the powder component (i.e. the weight of liquid component divided by the weight of powder component) within the kit is preferably 2:1 to 1:3. It is especially adjusted depending on the polymer content in the liquid component.

The kit of the invention generally consists of the powder component and the liquid component. It is then a two-component kit.

Both components are generally physically separated in order to avoid any premature reaction between the hydraulic binders of the powder component and the water contained in the liquid component. The kit may for example comprise two separate containers or packages, each of them containing one of the components. The kit may also comprise one container with two separate compartments, each of them containing one of the components.

For the waterproofing of roofs, terraces, balconies, wet rooms or facades, the composition is applied to a substrate of said roofs, terraces, balconies, wet rooms or facades to form a membrane.

The application can be done by roller, brush or spray. It can be done in several layers.

The membrane is then dried. Drying is normally done naturally in the air, without heating or blowing, in a period typically ranging from a few minutes to a few hours. The drying step is therefore usually not an active step. In other words, the membrane is generally just left to dry.

The final membrane can be the result of the application of several successive layers, for example 2 or 3 layers. Its (total) dry thickness is preferably between 1.0 and 5.0 mm, especially between 2.0 and 4.0 mm.

The substrate is preferably made of cementitious material (e.g. concrete, mortar or plaster), but it can also be made of stone (e.g. limestone), brick, terracotta, sandstone or ceramic.

The following examples illustrate the invention in a non-limiting manner.

The powder component for all examples comprised as hydraulic binder a mixture of CAC (28%), CEM I OPC (4%) and hemihydrate (10%), as well as 68wt% of aggregates (sands, fillers, pigments and fibers), and less than 1wt% of additives (accelerator, cellulose ether...) .

Several liquid components have been used. In all the examples, the weight ratio between the liquid component and the powder component was 1:1.

In a first comparative experiment, the liquid component was an aqueous dispersion of styrene-acrylate (Orgal^{®} K 460 R from Organik Kymia) containing 57wt% of polymers, having a pH of 7.0 to 9.0, a MFFT of 0°C and a Tg of -10°C. The surface charge determined by SCD was -33 pmol/g at pH = 7. This polymer is labelled SA#1.

In a second comparative experiment, the liquid component was an aqueous dispersion of styrene-acrylate (Orgal^{®} PST 50 A from Organik Kymia) containing 50wt% of polymers, having a pH of 7.5 to 9.0, a MFFT of 20°C and a Tg of 20°C. The surface charge determined by SCD was -231 pmol/g at pH = 8. The surface charge was therefore much higher (in absolute value) for this polymer than for the other. This polymer is labelled SA#2.

In the inventive examples, these aqueous dispersions have been mixed with polyurethane dispersions (PUD), with weight ratios PU:Styrene acrylic of 25:75 and 50:50 in terms of dry polymers. A non-ionic surfactant has been added, in an amount of 0.3 grams of dry surfactant per gram of dry polymer.

Two PUDs (PUD#1 and PUD#2) prepared from aromatic diisocyanates and polyether-polyols have been studied, having both a polymer amount of 44wt%, particle size of 200 nm, a pH of 7.0, a Tg of -1°C and a MFFT < 1°C. The surface charge determined by SCD was -252 pmol.g at pH = 7. PUD#2 also contained alkoxy silyl groups while PUD#1 did not contain any.

Membranes 2-3 mm thick have been produced and to test their flexibility at room and cold temperature, several samples (usually 7) have been characterized in terms of tensile strength and maximum elongation, at room temperature and at -20°C.

In Table 1 and 2 below, the tensile strengths (MPa) and elongation at break (%) are reported.

The examples according to the invention show a much higher elongation than the comparative examples at low temperature.

**[Table 1]**

| | C1 | 1 | 2 | 3 | 4 |
|---|---|---|---|---|---|
| SA#1 | 100 | 75 | 50 | 75 | 50 |
| PUD#1 | - | 25 | 50 | - | - |
| PUD#2 | - | - | - | 25 | 50 |

| *Room temperature* | | | | | |
|---|---|---|---|---|---|
| Tensile strength (MPa) | 0.41 | 0.35 | 0.50 | 0.31 | 0.37 |
| Elongation (%) | 47 | 61 | 97 | 44 | 77 |

| *-20°C* | | | | | |
|---|---|---|---|---|---|
| Tensile strength (MPa) | 3.25 | 1.67 | 1.67 | 1.74 | 1.85 |
| Elongation (%) | 2 | 40 | 60 | 34 | 43 |

**[Table 2]**

| | C2 | 5 | 6 |
|---|---|---|---|
| SA#2 | 100 | 50 | 50 |
| PUD#1 | - | 50 | - |
| PUD#2 | - | - | 50 |

| *Room temperature* | | | |
|---|---|---|---|
| Tensile strength (MPa) | 0.71 | 0.71 | 0.65 |
| Elongation (%) | 5 | 8 | 6 |

| *-20°C* | | | |
|---|---|---|---|
| Tensile strength (MPa) | 1.79 | 2.11 | 2.23 |
| Elongation (%) | 0.1 | 13 | 19 |

## Claims

1. A kit for preparing a waterproofing membrane comprising:
- a powder component comprising hydraulic binder and aggregates, and
- a liquid component comprising i) an aqueous dispersion of polyurethane and of a polymer other than polyurethane, and ii) a surfactant.

2. The kit of Claim 1, wherein the total amount of hydraulic binder in the powder component is 10-60wt%, especially 20-50wt%.

3. The kit of Claim 1 or Claim 2, wherein the total amount of aggregates in the powder component is 20-80wt%, especially 30-60wt%.

4. The kit of any of the preceding Claims, wherein the hydraulic binder is selected from Ordinary Portland Cements, Calcium Aluminate Cements, Calcium Sulfoaluminate Cements, fly ashes, slags, hydraulic lime, source of calcium sulfate and mixtures thereof.

5. The kit of any of the preceding Claims, wherein the polymer other than polyurethane is based on one or more monomers selected from the group including vinyl esters, methacrylates, acrylates, methacrylic acid, acrylic acid, vinyl aromatics, vinyl acetal, olefins, dienes and vinyl halides.

6. The kit of the preceding Claim, wherein the polymer other than polyurethane is selected from styrene-acrylate copolymers, styrene-butadiene copolymers and mixtures thereof.

7. The kit of any of the preceding Claims, wherein the Tg of the polymer other than polyurethane is -50 to +50°C, especially -10 to +20°C.

8. The kit of any of the preceding Claims, wherein the polyurethane is anionic.

9. The kit of any of the preceding Claims, wherein the total amount of polymers represents 15-65wt%, especially 20-60wt%, based on the weight of polymers and water.

10. The kit of any of the preceding Claims, wherein the weight ratio between the total amount of polyurethane and the total amount of polymer other than polyurethane is 10:90 to 90:10, especially 20:80 to 70:30.

11. The kit of any of the preceding Claims, wherein the surfactant is non-ionic.

12. The kit of any of the preceding Claims, wherein the amount of surfactant is 0.01-0.40 grams of dry surfactant per gram of dry polymer.

13. The kit of any of the preceding Claims, wherein the weight ratio between the liquid component and the powder component is 2:1 to 1:3.

14. A method of waterproofing a roof, a deck, a balcony, a wet room or a façade, comprising mixing the liquid component with the powder component of the kit according to any one the preceding Claims to obtain a composition and applying said composition to a substrate of said roof, deck, balcony or facade to form a membrane, and then drying said membrane to obtain a dry membrane having a dry thickness of from 0.5 to 6.0 mm.

15. A waterproofing membrane able to be obtained by the method of the preceding Claim.
